# EUROPÄISCHE PATENTSCHRIFT

(11) **EP 0 718 596 B1**
(45) Veröffentlichungstag und Bekanntmachung des Hinweises auf die Patenterteilung: **13.03.2002**
(21) Anmeldenummer: 95120250.6
(22) Anmeldetag: 21.12.1995
(51) Int. Cl.: G01B 17/02, G10K 11/32, B06B 1/06, G01N 29/22, G10K 11/22

(54) **Verfahren und Vorrichtung zur dynamischen Bestimmung der Dicke und/oder des Flächengewichts von bewegtem Messgut**
Procedure and device to determine dynamically the thickness and/or the weight of a moving object
Procédé et dispositif pour la détermination dynamique de l'épaisseur et/ou du poids d'un objet en mouvement

(30) Priorität: 23.12.1994 DE 4446367
(43) Veröffentlichungstag der Anmeldung: 26.06.1996
(73) Patentinhaber: Giesecke & Devrient GmbH, 81677 München (DE)
(72) Erfinder: Gerz, Christoph, Dr., D-83624 Ottering (DE)
(74) Vertreter: Klunker . Schmitt-Nilson . Hirsch

(56) Entgegenhaltungen:
- EP-A- 0 167 010
- DE-A- 1 548 170
- DE-A- 3 048 710
- US-A- 4 494 841
- PATENT ABSTRACTS OF JAPAN vol. 009, no. 258 (E-350), 16.Oktober 1985 & JP 60 106294 A (MATSUSHITA DENKI SANGYO KK), 11.Juni 1985,
- MANTHEY W ET AL: "ULTRASCHALLSENSOREN AUF DER BASIS PIEZOELEKTRISCHER POLYMERE" TECHNISCHES MESSEN TM 1982 - 1988 INCOMPLETE, Bd. 56, Nr. 10, Seiten 377-384, XP000070387
- BLESSING H: "BILDGEBENDES LUFT-ULTRASCHALL-SYSTEM AUS PVDF-MEMBRANEWANDLERN" TECHNISCHES MESSEN TM 1982 - 1988 INCOMPLETE, Bd. 61, Nr. 2, 1.Februar 1994, Seiten 60-64, XP000429829

## Beschreibung

Die Erfindung betrifft ein Verfahren zur dynamischen berührungslosen Bestimmung der Dicke und/oder des Flächengewichts von einem in einer definierten Richtung transportierten Meßgut, wie Banknoten, Papier oder ähnlichen, mittels Ultraschall und eine Vorrichtung zur Durchführung des Verfahrens.

Ein Verfahren der obengenannten Art ist z. B. aus der EP-B1 0 167 010 bekannt. Ein Schallsender strahlt auf das bewegte Meßgut Ultraschallwellen ab, wobei der von dem Meßgut kommende Schallanteil in Form einer Reflexions-oder Transmissionsmessung von einem Empfänger erfaßt wird. Die erfaßte Schallintensität wird als Maß für die Bestimmung der Dicke und/oder des Flächengewichts ausgewertet. Aufgrund von Beugungseffekten lassen sich mit dem bekannten Verfahren auf dem Meßgut nur Strukturen mit einer Ausdehnung oberhalb einer Wellenlänge erkennen.

DE-A1-30 48 710 A beschreibt ein Verfahren der obengenannten Art, in welchem zur Reduzierung von Störanteile der Empfänger um die Schallaufzeit zwischen Sender und Empfänger verzögert eingeschaltet und vor dem Eintreffen systembedingter Störanteile am Empfänger wieder abgeschaltet wird. PATENT ABSTRACTS OF JAPAN vol. 009, no. 258 (E-350), 16.Oktober 1985 & JP 60 106294 A (MATSUSHITA DENKI SANGYO KK), 11.Juni 1985, beschreibt die Verwendung von mehrere Sender zur Erhöhung der Schalintensität.

Aus dem Stand der Technik sind weiterhin Ultraschallsensoren auf der Basis piezoelektrischer Polymerfolien, z. B. für Identifikations- oder Ortungsaufgaben bekannt. Stellvertretend hierfür sei auf die Artikel von W. Manthey und N. Kroemer "Technisches Messen" tm 56 (1989) 10, R. Oldenbourg-Verlag und W. Manthey, Valentin Mágori "Sensor 93, Kongreßband II" hingewiesen. Diese Artikel beschreiben Ultraschallwandler-"Arrays", die mehrere Sender in Form von zylindrisch gewölbten Piezopolymerfolien enthalten, die in einer Ebene angeordnet sind.

Der Erfindung liegt die Aufgabe zugrunde, ein Verfahren bzw. eine Vorrichtung zur Bestimmung der Dicke und/oder des Flächengewichts von Meßgut vorzuschlagen, das mit geringem technischen Aufwand eine hohe räumliche Auflösung in der Meßebene und eine gute Signalausbeute ermöglicht.

Erfindungsgemäß wird die Aufgabe durch die in dem kennzeichnenden Teil der nebengeordneten Ansprüche angegebenen Merkmale gelöst.

Der Grundgedanke der Erfindung besteht darin, das Meßgut mit einem fokussierten Ultraschallfeld hoher Schallintensität zu beschallen und den vom Meßgut kommenden Schallanteil unmittelbar im Nahfeld, d. h. in einem Abstand der kleiner oder gleich der verwendeten Schallwellenlänge ist, zu erfassen und zur Bestimmung der Dicke und/oder des Flächengewichts auszuwerten. Die Fokussierung des Schallfeldes wird dadurch erhalten, daß mehrere Senderelemente räumlich derart angeordnet sind, daß sie in bezug auf den Meßort alle denselben Abstand aufweisen und die Senderelemente phasengleich Schallwellen abstrahlen, deren Amplituden sich am Meßort überlagern. Dadurch wird der Schall am Meßort konzentriert.

Die Erfindung hat den Vorteil, daß durch die räumliche Anordnung der Senderelemente die Fokussierung mit geringem technischen Aufwand erreicht wird. Weiterhin erhöht sich durch die Fokussierung bei konstantem Hintergrundrauschen das Signal-Rausch-Verhältnis gegenüber nichtfokussierenden Verfahren. Gleichzeitig reduziert sich der Schallanteil, der nicht zur Messung beiträgt und auf unkontrollierten Wegen zum Empfänger gelangen kann.

Vorzugsweise erfolgt die Nahfeldmessung mit Dauerschall und in Transmission, d. h. daß nur der durch das Meßgut hindurchtretende Schallanteil erfaßt und der Auswertung zugrundegelegt wird. Die Anwendung von Dauerschall ermöglicht eine kontinuierliche Abtastung in Bewegungsrichtung des Meßgutes. Vorzugsweise wird das Meßgut über die gesamte Breite mit einem fokussierten linienförmigen Schallfeld beaufschlagt, wodurch das in Längsrichtung bewegte Meßgut dann auch senkrecht zur Bewegungsrichtung des Meßguts und somit vollständig abgetastet werden kann. Dies ermöglicht z. B. die Feststellung von Klebestreifen auf Banknoten oder auch fehlender Teile an Banknoten oder auch die Erkennung von sogenannten Doppel- und Mehrfachabzügen, was für die Zählung bei Banknotensortierautomaten wichtig ist.

Die Senderelemente sind vorzugsweise auf einem Träger angeordnet, der in der Form einem Segment eines Zylindermantels entspricht und werden im wesentlichen von halbzylindrisch gewölbten Piezopolymerfolien gebildet. Um eine hohe räumliche Auflösung und eine gute Signalausbeute zu ermöglichen, müssen die Abmessungen der schallempfindlichen Empfängerfläche kleiner als eine Wellenlänge sein. Der erfindungsgemäße Empfänger, der für die Schallzuführung ein Röhrchen vorsieht, welches den vom Meßgut kommenden Schallanteil einfängt und nach Art eines Stethoskops einem Mikrophon zuleitet, erlaubt, daß Resonanzen zwischen dem Meßgut einerseits und dem Empfänger und seiner Halterung andererseits vermieden werden.

Das Röhrchen kann außen mit einem gut schallabsorbierenden Material und innen ganz oder teilweise mit einem mäßig schallabsorbierenden Material gefüllt werden. Durch letzteres werden Resonanzen im Röhrchen vermieden und außerdem kann durch den innen im Röhrchen befindlichen Schaumstoff das Mikrophon vor Verschmutzungen geschützt werden. Durch die Verwendung des Röhrchens kann somit die Empfängerseite einschließlich der schallempfindlichen Fläche fast vollständig mit Schaumstoff ausgekleidet werden. Der Durchmesser des Röhrchens ist entsprechend an die aktive Fläche des Empfängers angepaßt. Vorzugsweise wird ein Piezofolienmikrophon verwendet, das sich akustisch an das Röhrchen gut ankoppeln läßt und dessen aktive Fläche mit einer Ausdehnung von weniger als einer Wellenlänge realisiert werden kann.

Weitere Vorteile sowie Weiterbildungen der Erfindung ergeben sich aus den Unteransprüchen sowie der nachfolgenden Beschreibung von Ausführungsbeispielen der Erfindung anhand der beigefügten Figuren.

Darin zeigen:
- Fig. 1: eine schematische Darstellung einer Vorrichtung zur Dicken- und/oder Flächengewichtsbestimmung,
- Fig. 2: ein Ausführungsbeispiel einer Senderanordnung,
- Fig. 3: ein Ausführungsbeispiel eines Empfängers,
- Fig. 4: eine schematische Darstellung einer Vorrichtung mit einer Empfängeranordnung mit mehreren Empfängern.

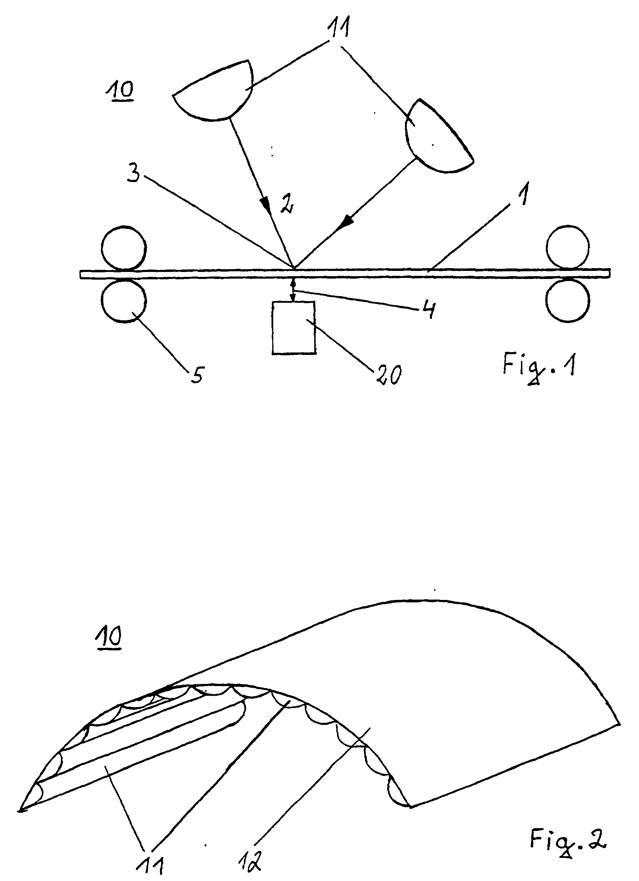

Fig. 1 zeigt beispielhaft in schematischer Darstellung eine Vorrichtung zur Durchführung des erfindungsgemäßen Verfahrens. Das Meßgut 1, z. B. eine Banknote, wird von einer in Form der Transportrollen angedeuteten Transporteinrichtung 5 zwischen einer Senderanordnung 10 und einem Empfänger 20 hindurchbewegt. Die Senderanordnung umfaßt wenigstens zwei Senderelemente 11, die relativ zu der Transporteinrichtung 5 derart angeordnet sind, daß die von den Senderelementen 11 in Richtung der Pfeile 2 abgestrahlten Ultraschallwellen unter dem gleichen Schallweg 2, d. h. im gleichen Abstand, z. B. 20 mm, bezogen auf den Meßort 3 auftreffen. Am Meßort 3, addieren sich die von den Sendern abgestrahlten Schalldrukkamplituden zu einem fokussierten Schallfeld hoher Intensität. Die Senderelemente 11 weisen alle die gleiche Abstrahlcharakteristik auf und werden zeitgleich betrieben, wodurch eine gleichphasige Abstrahlung von Schallwellen mit konstanter Amplitude gewährleistet ist.

Zur Bestimmung der Dicke und/oder des Flächengewichts wird der durch das Meßgut transmittierte Schallanteil von der Empfängeranordnung in einem Abstand 4, der kleiner oder gleich der verwendeten Schallwellenlänge ist, erfaßt und von einer nicht dargestellten Einrichtung ausgewertet. Um eine hohe räumliche Auflösung und eine gute Signalausbeute zu erzielen, müssen die Abmessungen der schallempfindlichen Empfängerfläche kleiner als die verwendete Wellenlänge sein. Um Resonanzen zwischen dem Meßobjekt einerseits und dem Empfänger und seiner Halterung andererseits zu vermeiden, kann der Empfänger in einen schallabsorbierenden Schaumstoff, wie nachfolgend noch beschrieben wird, eingebettet werden. Bei einer entsprechenden Einbettung von Sender und Empfänger kann die Erfindung auch dann prinzipiell für eine Reflexionsmessung verwendet werden, wie dies beispielsweise in der eingangs genannten EP-B1 0167 010 beschrieben ist.

Fig. 2 zeigt ein Ausführungsbeispiel einer Senderanordnung für eine Vorrichtung gemäß Fig. 1. Die Senderanordnung 20 umfaßt eine Vielzahl von Senderelemente 11, die im wesentlichen halbzylindrisch gewölbte Piezopolymerfolien enthalten, die auf der konkaven Seite eines Trägers 12 nebeneinander angeordnet sind. Die Piezopolymerfolien weisen alle die gleiche Geometrie und die gleichen Materialeigenschaften auf, wodurch für alle Senderelemente die gleiche Abstrahlcharakteristik erhalten wird. Zur Befestigung der Piezopolymerfolien kann der Träger 12 mit Rillen versehen werden, in denen die Piezopolymerfolien eingespannt sind. Der Träger entspricht in der Form z. B. einem Segment eines Zylindermantels. Durch die auf der Zylindermantelfläche des Trägers 12 angeordneten Piezopolymerfolien werden die abgestrahlten Ultraschallwellen in Richtung der Zylinderachse über die gesamte Länge der Folien fokussiert, wodurch ein linienförmiges Schallfeld hoher Schallintensität entsteht. Die Geometrie der Senderanordnung, d. h. die Länge der halbzylindrischen Piezopolymerfolien, kann so gewählt werden, daß diese z. B. der maximalen Breite einer Banknote entspricht. Die Senderanordnung kann z. B. mit einer Frequenz von ungefähr 100 kHz betrieben werden. Die prinzipiellen Anforderungen und Gesetzmäßigkeiten für den Aufbau von Senderelementen mit Piezopolymerfolien sind in den eingangs genannten Artikeln "Ultraschallsensoren auf der Basis piezoelektrischer Polymere" von W. Manthey und N. Kroemer, erschienen im Technischen Messen, tm 56 (1989) 10, R. Oldenbourg-Verlag und "Ultraschallwandler-Arrays für Anwendungen in Luft" von W. Manthey und Valentin Mágori, verlegt im SENSOR 93 Kongreßband II genannt, und werden hier nicht näher beschrieben.

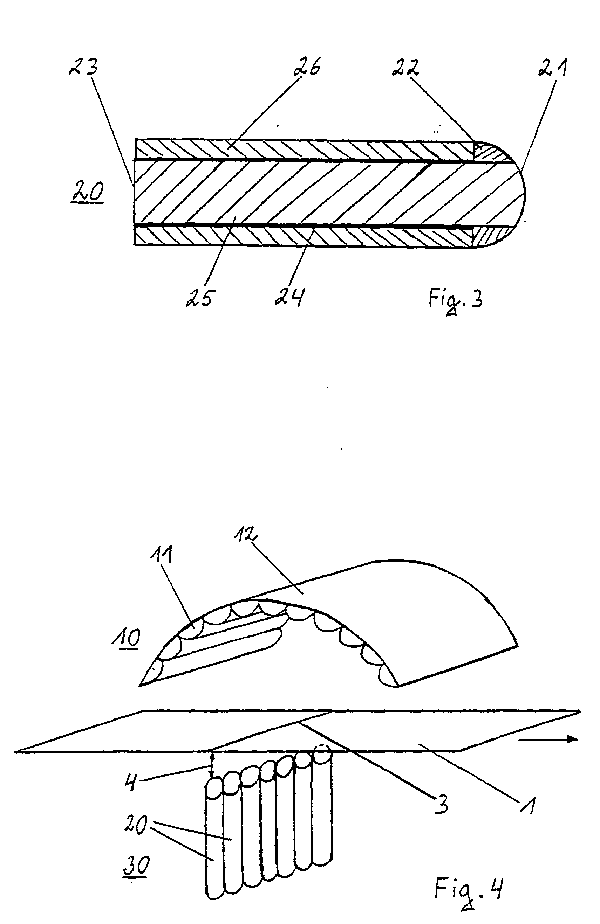

Fig. 3 zeigt in einer Schnittdarstellung ein Ausführungsbeispiel eines Ultraschallempfängers der vorzugsweise mit der in Fig. 2 dargestellten Senderanordnung verwendet wird. Der Empfänger 20 umfaßt wenigstens ein Mikrophon 21 z. B. in Form einer Piezopolymerfolie, die auf der konvexen Seite eines einseitig abgeflachten zylindrischen Trägers 22 angeordnet ist. Der Träger 22 weist für die Schallzuführung auf der abgeflachten Seite ein Loch 23 auf, welches zur Schallzuführung des von dem Meßgut kommenden Schallanteils dient. Die Abmessungen des Mikrophons betragen für einen Betrieb bei ungefähr 100 KHz, z. B. für den Zylinderdurchmesser, 3,5 mm bei einer Folienbreite von ebenfalls 3,5 mm. Zusätzlich kann unmittelbar an das Mikrophon 21 ein Röhrchen 24 angeordnet werden, welches den vom Meßgut kommenden Schallanteil einfängt und nach Art eines Stethoskops dem Mikrophon zuleitet. Das Röhrchen ist außen mit einem schallabsorbierenden Schaumstoff 26, z. B. ein offenporiger Polyurethanschaumstoff, versehen, wodurch nur der unmittelbar von dem Meßgut kommende Schallanteil und keine von dem Empfänger bzw. der Senderanordnung reflektierten Schallwellen erfaßt werden, die die Messung verfälschen könnten. Weiterhin ist es möglich, das Röhrchen innen ganz oder teilweise mit einem mäßig schallabsorbierendem Material 25 zu füllen, um Resonanzen im Röhrchen zu vermeiden und das Mikrophon vor Verschmutzungen zu schützen. Der Schaumstoff soll dabei so viel absorbieren, daß keine Resonanzen auftreten und so viel durchgelassen wird, daß ein ausreichendes Signal erhalten wird. Das Röhrchen kann z. B. einen Außendurchmesser von 3 mm und einen Innendurchmesser von 2,5 mm und eine Länge von ungefähr 30 mm aufweisen.

Fig. 4 zeigt eine schematische Darstellung einer Vorrichtung mit einer Empfängeranordnung 30 mit mehreren Empfängern 20, die insbesondere dann vorteilhaft ist, wenn in vielen parallelen Spuren, z. B. über die gesamte Banknotenbreite, gemessen wird. Die Senderanordnung 10 beaufschlagt das Meßgut 1 über die gesamte Breite 3 mit einem fokussierten linienförmigen Schallfeld. Das in Längsrichtung bewegte Meßgut kann dann von der quer zur Transportrichtung in einem Abstand 4, z. B. 0,5 - 2 mm, angeordneten Empfängerzeile 30, die sich über die gesamte Breite des Meßguts erstreckt, in einer Transmissionsmessung vollständig abgetastet werden.

## Patentansprüche

1. Verfahren zur dynamischen berührungslosen Bestimmung der Dicke und/oder des Flächengewichts von einem in einer definierten Richtung transportierten Meßgut (1), wie Banknoten, Papier oder ähnlichem, mittels Ultraschall, **dadurch gekennzeichnet, daß** mehrere Sender (11) mit gleicher Abstrahlcharakteristik phasengleich in Richtung eines quer zur Transportrichtung definierten Bereichs des Meßguts (1) Ultraschallwellen abstrahlen, so daß im definierten Bereich des Meßgutes ein fokussiertes Schallfeld mit hoher Schallintensität erzeugt wird, der von dem Meßgut kommende Schallanteil in einem Abstand (4) vom Meßgut erfaßt wird, der kleiner oder gleich der verwendeten Schallwellenlänge ist und der erfaßte Schallanteil zur Bestimmung der Dicke und/oder des Flächengewichts ausgewertet wird.

2. Verfahren nach Anspruch 1, **dadurch gekennzeichnet, daß** das Meßgut (1) in Längsrichtung bewegt wird und daß sich der definierte Bereich über die gesamte Breite des Meßguts (1) erstreckt und linienförmig ist.

3. Verfahren nach Anspruch 1 oder 2, **dadurch gekennzeichnet, daß** das Meßgut (1) mit Dauerschall beaufschlagt wird und der durch daß Meßgut (1) transmittierte Schallanteil erfaßt und ausgewertet wird.

4. Vorrichtung zur Durchführung des Verfahrens nach Anspruch 1, umfassend eine Einrichtung (5) zum Transport des Meßguts (1) in einer definierten Richtung, eine Senderanordnung (10), wenigstens einen Empfänger (20), **dadurch gekennzeichnet, daß** die Senderanordnung (10) mehrere Sender (11) aufweist, die auf einen quer zur Transportrichtung definierten Bereich (3) des Meßguts (1) ein fokussiertes Schallfeld hoher Schallintensität abstrahlen, wobei die Sender (11) von dem mit dem fokussierten Schallfeld beaufschlagten Bereich des Meßguts alle in demselben Abstand (2) angeordnet sind und der Empfänger (20) vom Meßgut in einem Abstand angeordnet ist, der kleiner oder gleich der verwendeten Schallwellenlänge ist.

5. Vorrichtung nach Anspruch 4, **dadurch gekennzeichnet, daß** die Senderanordnung (10) als Sender (11) im wesentlichen halbzylindrisch gewölbte Piezopolymerfolien aufweist, deren Länge mindestens der Breite des Meßguts entspricht.

6. Vorrichtung nach Anspruch 5, **dadurch gekennzeichnet, daß** die halbzylindrisch gewölbten Piezopolymerfolien (11) zeilenförmig auf einem Träger (12) angeordnet sind, der in der Form einem Segment eines Zylindermantels entspricht.

7. Vorrichtung nach Anspruch 4, **dadurch gekennzeichnet, daß** die Vorrichtung mehrere Empfänger (20) aufweist, die quer zur Transportrichtung nebeneinander als Empfängerzeile (30) angeordnet sind, die sich über die gesamte Breite des Meßguts erstreckt.

8. Vorrichtung nach Anspruch 7, **dadurch gekennzeichnet, daß** der Empfänger (20) für die Schallzuführung ein Röhrchen (24) aufweist.

9. Vorrichtung nach Anspruch 8, **dadurch gekennzeichnet, daß** der Empfänger (20) eine im wesentlichen halbzylindrisch gewölbte Piezopolymerfolie aufweist, die auf einer Seite des Trägers (22) angeordnet ist und der Träger (22) für die Schallzuführung mit einem Loch (23) versehen ist.

## Claims

1. A method for dynamic noncontacting determination of the thickness and/or basis weight of a material under test (1), such as bank notes, paper or the like, transported in a defined direction, by means of ultrasound, **characterized in that** a plurality of transmitters (11) with the same radiation characteristic radiate ultrasonic waves in phase toward a defined area of the material under test (1) perpendicular to the transport direction, so that a focused sound field with high sound intensity is produced in the defined area of the material under test, the sound fraction coming from the material under test being detected at a distance (4) away from the material under test which is smaller than or equal to the acoustic wavelength used, and the detected sound fraction being evaluated for determining the thickness and/or basis weight.

2. A method according to claim 1, **characterized in that** the material under test (1) is moved in the longitudinal direction, and the defined area extends over the entire width of the material under test (1) and is linear.

3. A method according to claim 1 or 2, **characterized in that** the material under test (1) is exposed to continuous sound and the sound fraction transmitted by the material under test (1) is detected and evaluated.

4. An apparatus for carrying out the method according to claim 1, including a device (5) for transporting the material under test (1) in a defined direction, a transmitter array (10), at least one receiver (20), **characterized in that** the transmitter array (10) has a plurality of transmitters (11) which radiate a focused sound field with high sound intensity onto a defined area (3) of the material under test (1) perpendicular to the transport direction, the transmitters (11) all being disposed the same distance (2) away from the area of the material under test exposed to the focused sound field, and the receiver (20) being disposed a distance away from the material under test which is smaller than or equal to the acoustic wavelength used.

5. An apparatus according to claim 4, **characterized in that** the transmitters (11) of the transmitter array (10) are substantially semicylindrically arched piezopolymer films whose length corresponds at least to the width of the material under test.

6. An apparatus according to claim 5, **characterized in that** the semicylindrically arched piezopolymer films (11) are disposed in a row on a carrier (12) which corresponds in shape to a segment of a cylinder envelope.

7. An apparatus according to claim 4, **characterized in that** the apparatus has a plurality of receivers (20) disposed side by side perpendicular to the transport direction as a receiver array (30) which extends over the entire width of the material under test.

8. An apparatus according to claim 7, **characterized in that** the receiver (20) has a small tube (24) for feeding sound.

9. An apparatus according to claim 8, **characterized in that** the receiver (20) has a substantially semicylindrically arched piezopolymer film disposed on one side of the carrier (22), and the carrier (22) is provided with a hole (23) for feeding sound.

## Revendications

1. Procédé de détermination dynamique sans contact de l'épaisseur et/ou du grammage d'un objet à mesurer (1), tel que des billets de banque, du papier ou un objet analogue, acheminé dans une direction définie, à l'aide des ultrasons, **caractérisé en ce que** plusieurs émetteurs (11) avec la même caractéristique de rayonnement émettent en phase des ondes ultrasonores en direction d'une zone de l'objet à mesurer (1) définie transversalement au sens de transport, de manière à générer un champ sonore focalisé à haute intensité acoustique dans la zone définie de l'objet à mesurer, la fraction sonore émanant de l'objet à mesurer est détectée à une distance (4) de l'objet à mesurer qui est inférieure ou égale à la longueur d'onde acoustique utilisée et la fraction sonore détectée est analysée pour déterminer l'épaisseur et/ou le grammage.

2. Procédé selon la revendication 1, **caractérisé en ce que** l'objet à mesurer (1) est acheminé dans le sens longitudinal et **en ce que** la zone définie est une zone linéaire, qui s'étend sur toute la largeur de l'objet à mesurer (1).

3. Procédé selon la revendication 1 ou 2, **caractérisé en ce que** l'objet à mesurer (1) est sollicité par des ondes sonores entretenues et la fraction sonore transmise à travers l'objet à mesurer (1) est détectée et analysée.

4. Dispositif destiné à la mise en oeuvre du procédé selon la revendication 1, comprenant une unité (5) destinée à acheminer dans une direction définie l'objet à mesurer (1), un système d'émetteurs (10), au moins un récepteur (20), **caractérisé en ce que** le système d'émetteurs (10) comprend plusieurs émetteurs (11) qui émettent un champ sonore focalisé à haute intensité acoustique sur une zone (3) de l'objet à mesurer (1), définie transversalement au sens de transport, les émetteurs (11) étant tous disposés à la même distance (2) de la zone de l'objet à mesurer sollicitée par le champ sonore focalisé et le récepteur (20) étant disposé à une distance de l'objet à mesurer qui est inférieure ou égale à la longueur d'onde acoustique utilisée.

5. Dispositif selon la revendication 4, **caractérisé en ce que** le système d'émetteurs (10) comporte des émetteurs (11) formés par des films en polymère piézoélectrique, cintrés avec une forme sensiblement semi-cylindrique, dont la longueur est au moins égale à la largeur de l'objet à mesurer.

6. Dispositif selon la revendication 5, **caractérisé en ce que** les films en polymère piézoélectrique (11), cintrés avec une forme semi-cylindrique, sont disposés en lignes sur un support (12), dont la forme correspond à un segment d'une paroi latérale de cylindre.

7. Dispositif selon la revendication 4, **caractérisé en ce que** le dispositif comporte plusieurs récepteurs (20) qui forment des lignes réceptrices (30), qui sont juxtaposées transversalement au sens de transport et qui s'étendent sur toute la largeur de l'objet à mesurer.

8. Dispositif selon la revendication 7, **caractérisé en ce que** le récepteur (20) est muni d'un petit tube (24) pour l'admission des ondes sonores.

9. Dispositif selon la revendication 8, **caractérisé en ce que** le récepteur (20) comporte un film en polymère piézoélectrique, cintré avec une forme sensiblement semi-cylindrique, qui est disposé sur un côté du support (22) et le support (22) comporte un trou (23) destiné à l'admission des ondes sonores.
